# EUROPEAN PATENT APPLICATION

(11) **EP 1 881 030 A1**
(43) Date of publication of application: **23.01.2008**
(21) Application number: 06117627.7
(22) Date of filing: 21.07.2006
(51) Int. Cl.: C08L 33/08

(54) **Non PVC thermoplastic compositions**

(71) Applicant: ARKEMA FRANCE, 92700 Colombes (FR)
(72) Inventor: Girois, Stéphane, 69530 Brignais (FR); Granel, Claude, 75017 Paris (FR); Hajji, Philippe, 69520 Grigny (FR); Brake, Jeffrey, 19422 Blue Bell, PA Montgomery (US); Chenet, Alexis, 30650 Rochefort du Gard (FR); Fenouillot-Rimlinger, Françoise, 38080 L'isle d'abeau (FR); Sautereau, Henry, 69120 Vaulx-en-Velin (FR)

(57) **Abstract**

The present invention relates to a thermoplastic composition, said composition comprising at least one non-PVC thermoplastic matrix and at least one copolymer chosen from the group consisting of acrylic-based copolymer having an average molecular weight M_{w} below 400.000 g/mol and acrylic-styrene-based copolymer.

The present invention also relates to a process for manufacturing an article from such a thermoplastic composition and to an article obtained from such a thermoplastic composition.

## Description

### Field of the invention

The present invention relates to thermoplastic compositions based on a thermoplastic matrix having improved properties during and after processing step for namely offering higher productivity and reducing scrap rates.

The present invention also relates to a process for manufacturing an article from such a thermoplastic composition but also to an article obtained from such a thermoplastic composition provided with improved physical and mechanical properties.

### Background of the invention

Currently, additives - also called "process aid additives" - are added to thermoplastic matrices to control melt rheology and thus facilitating processing steps.

Among said additives, acrylic-based copolymers or copolymers blends containing at least one incompatible function, block or fraction with respect to the thermoplastic matrix, can be advantageously used.

High average molecular weight acrylic-based copolymers are commonly used in rigid polyvinylchloride (PVC) compositions to control melt rheology and more especially to promote PVC fusion and enhance melt strength. Those process aids copolymers, which have an average molecular weight, M_{w}, typically ranging between 400.000 and 4.000.000 g/mol, are typically based on acrylic monomers such as methyl methacrylate (MMA), butyl acrylate (BA), butyl methacrylate (BMA) and ethyl acrylate (EA).

Some benefits of using some of said high average molecular weight acrylic-based copolymers additives in non-PVC thermoplastic compositions have namely been described in the prior art document WO 02/36688 A2. Said document mainly refers to improvement of impact strength and gate blush reduction of thermoplastic compositions comprising a polycarbonate (PC) and graft polymers of acrylate-styrene-acrylonitrile (ASA), acrylonitrile-butadiene-styrene (ABS) or acrylonitrile-(ethylene-propylene-diene)-styrene (AES), when using process aids with an average molecular weight M_{w} above 400.000 g/mol (or Daltons), preferably above 500.000 g/mol, more preferably above 550.000 g/mol, and most preferably above 600.000 g/mol. The high average molecular weight process aid disclosed in WO 02/36688 A2 consists in styrene-acrylonitrile copolymer or in acrylic copolymer, such as methyl methacrylate-butyl methacrylate (MMA-BMA), methyl methacrylate-ethylacrylate (MMA-EA), methyl methacrylate-butyl acrylate (MMA-BA), and butyl methacrylate-methacrylate (8MA-methaeryfate).

Other particular process aids copolymers contain at least one lubricating function, which can be also seen as an incompatible function with respect to an host PVC thermoplastic matrix. This incompatible function is mainly provided by the use of special co-monomers like styrene or butyl methacrylate (BMA) into the composition of these copolymers. The benefits of using such process aids into PVC compositions are well known and well described in the literature.

Particularly, US Patent Application of serial number No. 11/053364 relates to a thermoplastic PVC composition having reduced melt viscosity and output rate increase during PVC extrusion process. Said prior art thermoplastic composition comprises a rigid PVC-based resin and from 0,3 to 2,5 wt % of an acrylic-styrene-based process aid copolymer consisting in MMA-BA-styrene copolymer having from 41 to 44 wt % of MMA monomer units, from 22 to 24 wt % of BA monomer units and from 33 to 36 wt % of styrene monomer units.

There is a need for a process aid to be added into thermoplastic non-PVC compositions that allows to improve the properties during processing step (melt rheology control and particularly flow property improvement, output rate increase, lower thermodegradation...), as well as the intrinsic properties of the final thermoplastic composition, such as better mechanical properties retention, improved aesthetics of molded parts and gate blush reduction.

### Summary of the invention

The present invention relates to the use of acrylic-based copolymers having an average molecular weight M_{w} below 400.000 g/mol or of acrylic-styrene-based copolymer, or copolymers blends thereof, to produce a thermoplastic composition based on a non-PVC thermoplastic matrix.

The present invention also relates to a process for producing an article and to an article formed from a thermoplastic composition according to the present invention.

More particularly, the present invention relates to a thermoplastic composition, which comprises
- at least one non-PVC thermoplastic matrix, and
- at least one copolymer chosen from the group consisting of acrylic-based copolymer having an average molecular weight M_{w} below 400.000 g/mol and acrylic-styrene-based copolymer.

Surprisingly, it was found that an addition of at least one of said process aid copolymers, i.e. acrylic-styrene-based copolymer and/or acrylic-based copolymer, said acrylic-based copolymer having an average molecular weight M_{w} below 400.000 g/mol, to a thermoplastic non-PVC matrix meets the above-listed advantages but also many others that will be described hereafter.

With regard to the advantages provided during processing steps, may be cited:
- the extrusion torque and pressure reduction, thus facilitating compounding and processing of thermoplastics compositions and consequently allowing higher productivity,
- an increased melt strength,
- a better resistance to yellowing effect upon processing,
- a metal release effect, thus reducing sticking to metallic parts of processing tools, preventing unwanted deposits and well known "plate-out" phenomena, but also increasing injection moulding productivity, and
- reducing scrap rates.

With regard to the advantages brought to the final thermoplastic composition and of course to article made, namely moulded or extruded, from the thermoplastic composition of the present invention, may be cited:
- an improved surface quality and a reduction of the typical processing troubles, such as gate blush, shark skin, jetting, thus given improved aesthetic qualities to the article of the present invention, such as an improved colourability,
- an equal or superior impact strength (e.g. notched lzod or Charpy tests),
- a higher impact strength retention as well as a better resistance to yellowing effect upon thermal aging and weathering, and
- a strong anisotropy reduction for physical and mechanical properties (e.g. impact strength), even upon thermal ageing.

### Detailed description

The invention relates to a thermoplastic composition, which comprises
- at least one non-PVC thermoplastic matrix, and
- at least one copolymer chosen from the group consisting of acrylic-based copolymer having an average molecular weight M_{w} below 400.000 g/mol and acrylic-styrene-based copolymer.

In a first aspect of the present invention, the at least one acrylic-styrene-based copolymer contains styrene monomer units and at least one or more other monomer units chosen from the group consisting of acrylate, alkyl acrylate, methacrylate and alkyl methacrylate. Said acrylic-styrene-based copolymer is of any average molecular weight M_{w}.

Said alkyl may be either linear or branched and is preferably chosen form the group consisting of methyl, ethyl, propyl and butyl.

More preferably, said acrylic-styrene-based copolymer is chosen from the group consisting of methacrylate, ethyl acrylate (EA), butyl acrylate (BA), methyl methacrylate (MMA) and butyl methacrylate (BMA).

Only one acrylic-styrene-based copolymer may be added to the non-PVC thermoplastic matrix. But it is also possible to add a blend of two or more of such acrylic-styrene-based copolymers.

In a particularly preferred embodiment, the at least one acrylic-styrene-based copolymer is a copolymer chosen from the group consisting of BA-styrene and MMA-BA-styrene, or a blend thereof.

In a second aspect of the present invention, the at least one copolymer may be an acrylic-based copolymer having an average molecular weight M_{w} below 400.000 g/mol.

According to the present invention, the expression "acrylic-based copolymer" does of course not cover copolymers based on acrylic and styrene monomer units, the latter ones being covered by the expression "acrylic-styrene-based copolymers" and here-above described.

Said acrylic-based copolymer contains at least two or more monomer units chosen from the group consisting of acrylate, alkyl acrylate, methacrylate and alkyl methacrylate.

Said alkyl may be either linear or branched and is preferably chosen form the group consisting of methyl, ethyl, propyl and butyl.

More preferably, said acrylic-based copolymer is chosen from the group consisting of methacrylate, ethyl acrylate (EA), butyl acrylate (BA), methyl methacrylate (MMA) and butyl methacrylate (BMA).

Only one acrylic-based copolymer may be added to the non-PVC thermoplastic matrix. But it is also possible to add a blend of two or more of such acrylic-based copolymers.

In a particularly preferred embodiment, the at least one acrylic-based copolymer is a copolymer chosen from the group consisting of BA-MMA and BA-BMA-MMA, or a blend thereof.

It is also possible to add to a non-PVC thermoplastic matrix a blend comprising at least one of said acrylic-based copolymer and at least one of said acrylic-styrene based copolymer.

The at least one non-PVC thermoplastic matrix may be based on polycarbonate (PC) or its alloys, on polyesters such as polybutylene terephthalate (PBT) or polyethylene terephtalate (PET), on acrylonitrile-butadiene-styrene (ABS), on styrene-acrylonitrile (SAN) or on acrylonitrile-(ethylene-propylene-diene)-styrene (AES), or a blend thereof.

Preferably, the at least one non-PVC thermoplastic matrix is chosen from the group consisting of polycarbonate (PC), acrylonitrile-butadiene-styrene (ABS), styrene-acrylonitrile (SAN), acrylate-styrene-acrylonitrile (ASA), acrylonitrile-(ethylene-propylene-diene)-styrene (AES), polybutylene terephthalate (PBT) and polyethylene terephtalate (PET), or a blend thereof.

A preferred non-PVC thermoplastic matrix blend is for example chosen from the group consisting of PC/ASA, PC/ABS, PC/SAN and PC/PBT.

In a preferred embodiment, the thermoplastic composition of the present invention comprises from 0,1 to 30 wt %, and preferably from 1 to 5 wt %, based on the weight of the at least one non-PVC thermoplastic matrix, of the at least one copolymer of the present invention, either acrylic-styrene-based copolymer and/or acrylic-based copolymer.

The present invention also relates to a process for manufacturing an article. Said process comprises the following steps of:
- forming a blend of the thermoplastic composition according to the present invention, and
- melt processing said blend to form an article.

The melt process may be conducted by any currently used molded processes, namely by injection molding or by extruding.

The present invention also relates to an article formed by melt-processing having the thermoplastic composition as described above.

### Detailed example

A PC/ABS blend, Cycoloy^{®} C1000HF (from GE), was used as the host thermoplastic matrix to evaluate separately the benefits of the two process aids copolymers according to the present invention:
- a MMA-BA-styrene copolymer having an average molecular weight M_{w} of 450.000 g/mol (hereafter called copolymer A), and
- a BA-BMA-MMA copolymer having an average molecular weight M_{w} below 250,000 g/mol (hereafter called copolymer B).

The above average molecular weight M_{w} values have been measured by GPC technique in chloroform using calibration curve based on analysis of monodisperse fractions of reference polystyrene of known molecular weight.

5 parts by weight of the process aid copolymer (copolymer A or copolymer B), were mixed together with 100 parts by weight of the PC/ABS blend using a co-rotative twin parallel screw extruder (Clextral) using a temperature profile ranging from 100 to 250°C. The resulting granulated products where injection molded on a DEMAG D85 NCIII-K machine equipped with a specific ISO and ASTM specimens tool at a melt temperature varying from 250 to 260°C. The neat PC/ABS blend was also molded using the same protocol in order to better assess the effects of copolymer A and of copolymer B.

The following table shows some physical and mechanical tests results that were performed on the molded samples.

| | Neat PC/ABS | PC/ABS + 5 phr Copolymer A | PC/ABS + 5 phr Copolymer B |
|---|---|---|---|
| Extrusion torque (N)* | 5608 | 3854 | 4934 |
| Notched Izod impact strength (ISO 180) at 23°C | 35,0 | 36.3 | 37.2 |
| Notched Izod impact strength (ISO 180) at 23°C perpendicular to injection molding flow**** | 26.9 | 35.5 | 35.8 |
| Notched Izod impact strength (ASTM D256) at -20°C (kJ/m²) | 37.8 | 40,1 | 42.0 |
| Notched Izod impact strength (ISO 180) at 23°C after 4 days of thermal ageing at 120°C (kJ/m²)** | 16.2 | 27.9 | 22.4 |
| Yellow index after molding | 18.2 | 13.9 | 16.0 |
| Yellow Index after 4 days of thermal ageing at 120°C | 77.0 | 45.4 | 67.8 |
| Shark skin*** | Bad | Good | Good |
| Gate blush*** | Bad | Good | Good |

| | | | |
|---|---|---|---|
| * as measured on DSM lab scale twin conical screw extruder ** impact strength retention experiment *** typical well known aesthetic molding defects **** an ISO Izod impact test sample was prepared from a 4 mm thick plaque from the same injection molding campaign, choosing the sample length perpendicular to the injection flow direction (all others impact test samples of this table had their lengths parallel to injection flow direction). These results illustrate the benefits of copolymers A and B on anisotropy reduction. | | | |

## Claims

1. A thermoplastic composition comprising:
- at least one non-PVC thermoplastic matrix, and
- at least one copolymer chosen from the group consisting of acrylic-based copolymer having an average molecular weight M_{w} below 400.000 g/mol and acrylic-styrene-based copolymer.

2. The thermoplastic composition of claim 1, wherein the acrylic-based copolymer contains at least two or more monomer units chosen from the group consisting of acrylate, alkyl acrylate, methacrylate and alkyl methacrylate, said alkyl, either linear or branched, being defined as methyl, ethyl, propyl, butyl, and preferably from the group consisting of methacrylate, ethyl acrylate (EA), butyl acrylate (BA), methyl methacrylate (MMA) and butyl methacrylate (BMA).

3. The thermoplastic composition of claim 2, wherein the acrylic-based copolymer is a copolymer chosen from the group consisting of BA-MMA and BA-BMA-MMA, or a blend thereof.

4. The thermoplastic composition of anyone of claims 1 to 3, wherein the acrylic-styrene-based copolymer contains styrene monomer units and at least one or more other monomer units chosen from the group consisting of acrylate, alkyl acrylate, methacrylate and alkyl methacrylate, said alkyl, either linear or branched, being defined as methyl, ethyl, propyl, butyl, and preferably from the group consisting of methacrylate, ethyl acrylate (EA), butyl acrylate (BA), methyl methacrylate (MMA) and butyl methacrylate (BMA).

5. The thermoplastic composition of claim 4, wherein the acrylic-styrene-based copolymer is a copolymer chosen from the group consisting of BA-styrene and MMA-BA-styrene, or a blend thereof.

6. The thermoplastic composition of any one of claims 1 to 5, wherein the at least one non-PVC thermoplastic matrix is chosen from the group consisting of polycarbonate (PC), acrylonitrile-butadiene-styrene (ABS), styrene-acrylonitrile (SAN), acrylate-styrene-acrylonitrile (ASA), acrylonitrile-(ethylene-propylene-diene)-styrene (AES), polybutylene terephthalate (PBT) and polyethylene terephtalate (PET), or a blend thereof.

7. The thermoplastic composition of claim 6, wherein the at least one non-PVC thermoplastic matrix is a blend chosen from the group consisting of PC/ASA, PC/ABS, PC/SAN and PC/PST.

8. The thermoplastic composition of any one of claims 1 to 7, wherein the composition comprises from 0,1 to 30 wt %, and preferably from 1 to 5 wt %, based on the weight of the at least one non-PVC thermoplastic matrix, of the at least one copolymer.

9. A process for manufacturing an article comprising the following steps of:
- forming a blend of the thermoplastic composition according to any one of claims 1 to 8, and
- melt processing said blend to form an article.

10. An article formed by melt-processing having the thermoplastic composition of any one of claim 1 to 8.
